Europäisches Patentamt

European Patent Office

Office européen des brevets

(11) Veröffentlichungsnummer : **0 040 351**
**B1**

(12) **EUROPÄISCHE PATENTSCHRIFT**

(45) Veröffentlichungstag der Patentschrift :
**24.08.83**

(51) Int. Cl.³ : **H 04 J   3/06**

(21) Anmeldenummer : **81103355.4**

(22) Anmeldetag : **04.05.81**

(54) Synchronisiereinrichtung für ein Zeitmultiplexsystem.

(30) Priorität : **19.05.80 DE 3019078**

(43) Veröffentlichungstag der Anmeldung :
**25.11.81 Patentblatt 81/47**

(45) Bekanntmachung des Hinweises auf die Patenterteilung : **24.08.83 Patentblatt 83/34**

(84) Benannte Vertragsstaaten :
**AT BE CH FR GB IT LI NL SE**

(56) Entgegenhaltungen :
**DE A 2 814 000**
**DE B 1 282 074**
**GB A 1 246 879**
**US A 3 649 757**

**IBM TECHNICAL DISCLOSURE BULLETIN,
Band 10, Nr. 3, August 1967, Seiten 253-254 New
York. U.S.A. H.J. BELMAN et al. : « Frame
synchronization unit »**

(73) Patentinhaber : **SIEMENS AKTIENGESELLSCHAFT
Berlin und München Wittelsbacherplatz 2
D-8000 München 2 (DE)**

(72) Erfinder : **Müller, Horst, Dipl.-Ing.
Dammstrasse 11
D-8021 Hohenschäftlarn (DE)**

Synchronisiereinrichtung für ein Zeitmultiplexsystem

Die Erfindung betrifft eine Synchronisiereinrichtung für ein Zeitmultiplexsystem mit einem Empfangsschieberegister als Seriell-Parallel-Umsetzer, dessem Eingang ein Zeitmultiplexsignal zugeführt ist, mit einer Rahmenkennungswort-Erkennungsschaltung, einer Taktzentrale mit Teilerschaltungen und mit einer Synchronisierschaltung.

Bei einem schnellen Zeitmultiplexsystem beträgt die Übertragungsrate beispielsweise 565 Mbit pro Sekunde. Bei diesen Geschwindigkeiten muß eine extrem schnelle Schaltkreislogik eingesetzt werden. Entsprechend hoch ist der Stromverbrauch. Aus der DE-A-28 14 000 ist eine Demultiplexanordnung mit einer Synchronisiereinrichtung bekannt, bei der der Umfang der schnellen und leistungsintensiven Schaltungsteile möglichst klein gehalten wurde. Die ankommende Nachricht wird in einen Seriell-Parallel-Umsetzer eingeschrieben, dessen Ausgänge mit einer Rahmenerkennungsschaltung verbunden sind. Diese steuert über eine Synchronisierschaltung einen Frequenzteiler durch Rücksetzen in die richtige Phasenlage.

Für noch schnellere Zeitmultiplexsysteme ist der Anteil der leistungsintensiven Logik jedoch noch zu hoch und komplexere, ausreichend schnelle Logikschaltkreise sind nicht verfügbar oder nur schwer realisierbar.

Aufgabe der Erfindung ist es daher, eine Synchronisiereinrichtung für ein Zeitmultiplexsystem anzugeben, bei der ein möglichst geringer Schaltungsteil mit einer schnellen und daher leistungsintensiven Logik aufgebaut ist.

Die Aufgabe wird dadurch gelöst, daß bei n möglichen Phasenlagen und einem k · n = 1 Bits langen Rahmenkennungswort das Empfangsschieberegister n Kippstufen enthält, daß die Digitalsignaleingänge von n Schieberegistern mit jeweils k Kippstufen über eine Zuordnungseinrichtung mit den Ausgängen der n Kippstufen des Empfangsschieberegisters verbunden sind, daß die Zuordnungseinrichtung einen von einem Empfangstakt angesteuerten Frequenzteiler mit einem Teilungsverhältnis von n : 1 enthält, dessen Ausgang mit den Takteingängen der Schieberegister verbunden ist, daß die Eingänge der Rahmenkennungswort-Erkennungsschaltung an die Ausgänge der Kippstufen der Schieberegister angeschlossen sind und daß der Ausgang der Rahmenkennungswort-Erkennungsschaltung mit der Synchronisierschaltung verbunden ist, die über die Zuordnungsschaltung die Phasenlage der in die Schieberegister eingelesenen Bits gegenüber dem Zeitmultiplexsignal ändert.

Ein Vorteil dieser Synchronisiereinrichtung ist es, daß nur das Empfangsschieberegister mit der höchsten Taktgeschwindigkeit arbeitet. Die Länge des Empfangsschieberegisters entspricht der Anzahl der möglichen Phasenlagen. Bis auf ein oder zwei Kippstufen arbeitet die gesamte Synchronisierschaltung mit einer um den Faktor n geringeren Taktfrequenz.

Vorteilhaft ist es, daß dem Takteingang des Frequenzteilers der Zuordnungseinrichtung ein ODER-Gatter vorgeschaltet ist, daß einem ersten Eingang des ODER-Gatters der Empfangstakt zugeführt ist, daß einem zweiten Eingang des ODER-Gatters ein Sycnhronisierimpuls von der Synchronisierschaltung zugeführt ist, der jeweils einen Empfangstakt unwirksam macht und daß jeweils ein Eingang der Zuordnungseinrichtung direkt mit jeweils einem Ausgang der Zuordnungseinrichtung verbunden ist.

Diese Lösung ist besonder vorteilhaft, da sie einen minimalen Aufwand erfordert. Eine Synchronisation des Zeitmultiplexsystems wird dadurch erreicht, daß die Phase der Systemtakte bei jedem Synchronisiervorgang um einen Empfangstaktimpuls verschoben wird. Grundsätzlich ist es möglich, einen Empfangstaktimpuls ein- oder auszublenden; wegen der hohen Geschwindigkeit kommt jedoch praktisch nur das Ausblenden in Frage.

Eine andere vorteilhafte Ausgestaltung der Erfindung ist dadurch gegeben, daß eine anders ausgeführte Zuordnungseinrichtung mit einem Frequenzteiler mit einem Teilungsverhältnis von n : 1 vorgesehen ist, dessen mit dem Takteingang und dessen Ausgang mit dem Taktausgang der Zuordnungsschaltung verbunden ist, daß eine erste Gruppe mit n Kippstufen vorgesehen ist, deren Digitalsignaleingänge an die Ausgänge der Kippstufen des Empfangsschieberegisters angeschlossen sind, daß eine zweite Gruppe von n − 1 Kippstufen Z(n + 1) bis Z(2 n − 1) vorgesehen ist, daß die Digitalsignaleingänge dieser zweiten Gruppe von Kippstufen an die Ausgänge der ersten bis (n − 1) ten Kippstufender ersten Gruppe angeschaltet sind, daß die Ausgänge der Kippstufen der ersten und zweiten Gruppe so mit dem jeweiligen Eingängen von Multiplexern angeschaltet sind, daß die Ausgänge der Kippstufen Z(1 + m) bis Z(n + m) (m = 0,12 ..., n − 1) jeweils mit den Eingängen EO bis E(n − 1) jedes Multiplexers MU(n − m) verbunden sind, also an den Ausgängen der Multiplexer n mögliche Bitkombinationen entsprechend n möglichen Phasenlagen anliegen, und daß ein weiterer Frequenzteiler mit einem Teilungsverhältnis von n : 1 vorgesehen ist, dessen Ausgänge mit den Adreßeingängen der Multiplexer verbunden sind.

Diese Lösung hat den Vorteil, daß die Systemtakte unverändert bleiben. Bei einem Synchronisiervorgang wird jeweils und damit an die Rahmenkennungswort-Erkennungsschaltung durchgeschaltet.

Die Erfindung wird anhand eines Ausführungsbeispieles näher erläutert.

Es zeigen:

Figur 1 das Prinzip der Synchronisiereinrichtung,

Figur 2 ein Ausführungsbeispiel der Zuordnungseinrichtung,

Figur 3 ein weiteres Ausführungsbeispiel der Zuordnungseinrichtung und

Figur 4 ein Impulsdiagramm der Synchronisiereinrichtung.

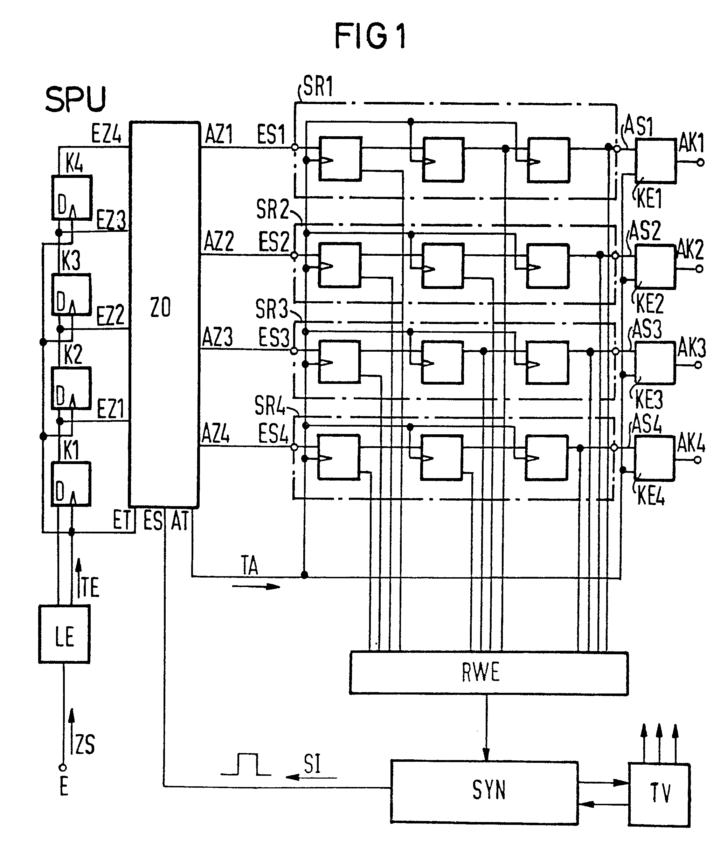

In Figur 1 ist eine Synchronisiereinrichtung für ein Zeitmultiplexsystem mit vier Kanälen dargestellt. Das Zeitmultiplexsignal ZS gelangt über einen Eingang E auf ein Leitungsendgerät LE. Das Leitungsendgerät LE enthält eine Schrittsynchronisiereinrichtung, bei der der Empfangstakt TE aus dem empfangenen Zeitmultiplexsignal ZS gewonnen wird. Das Leitungsendgerät kann ebenfalls noch einen Codeumsetzer enthalten, der aber für die Erfindung unwesentlich ist. Der in dem Leitungsendgerät gewonnene Empfangstakt TE und das digitale Zeitmultiplexsignal ZS werden einem als Seriell-Parallel-Umsetzer arbeitenden Empfangsschieberegister SPU mit vier Kippstufen K1 bis K4 zugeführt. Die Ausgänge der vier Kippstufen K1 bis K4 sind mit vier Eingängen EZ1 bis EZ4 einer Zuordnungseinrichtung ZO verbunden. Der Ausgang der ersten Kippstufen K1 ist also mit dem Eingang EZ1 verbunden, der Ausgang der letzten Kippstufe K4 des Schieberegisters ist mit dem Eingang EZ4 verbunden. Ebenso ist der Empfangstakt TE auf einen Eingang ET der Zuordnungseinrichtung geführt. Vier Ausgänge AZ1 bis AZ4 der Zuordnungseinrichtung ZO sind mit jeweils einem Digitalsignaleingang ES1 bis ES4 von vier Schieberegistern SR1 bis SR4 mit jeweils drei Kippstufen verbunden. Die Ausgänge AS1 bis AS4 der Schieberegisters SR1 bis SR4 sind auf Eingänge von vier Kanaleinheiten KE1 bis KE4 geführt. Die Ausgänge der vier Kanaleinheiten sind mit AK1 bis AK4 bezeichnet. Die Ausgänge der Kippstufen der Schieberegister SR1 bis SR4 sind auf eine Rahmenkennungswort-Erkennungsschaltung RWE geführt. Dies können je nach Rahmenkennungswort die nichtinvertierten oder die invertierten Ausgänge der Kippstufen der Schieberegister sein. Die Rahmenkennungswort-Erkennungsschaltung RWE enthält Gatterschaltkreise, im einfachsten Fall ein UND- oder ODER-Gatter. Der Ausgang der Rahmenkennungswort-Erkennungsschaltung ist auf einen Eingang der Synchronisierschaltung SYN geführt. Ein erster Ausgang der Synchronisierschaltung ist mit einem ersten Eingang einer Taktversorgung TV verbunden. Ein weiterer Ausgang der Synchronisierung ist mit einem Synchronisiereingang ES der Zuordnungseinrichtung ZO verbunden. Ein Taktausgang AT der Zuordnungseinrichtung ist mit den vier Takteingängen der Schieberegister SR1 bis SR4 und den Takteingängen der Kanaleinrichtungen KE1 bis KE4 verbunden. Von der Taktversorgung werden mehrere Arbeitstakte abgegeben, z. B. für das Leitungsendgerät oder die Kanaleinrichtungen. Dies ist durch Pfeile angedeutet.

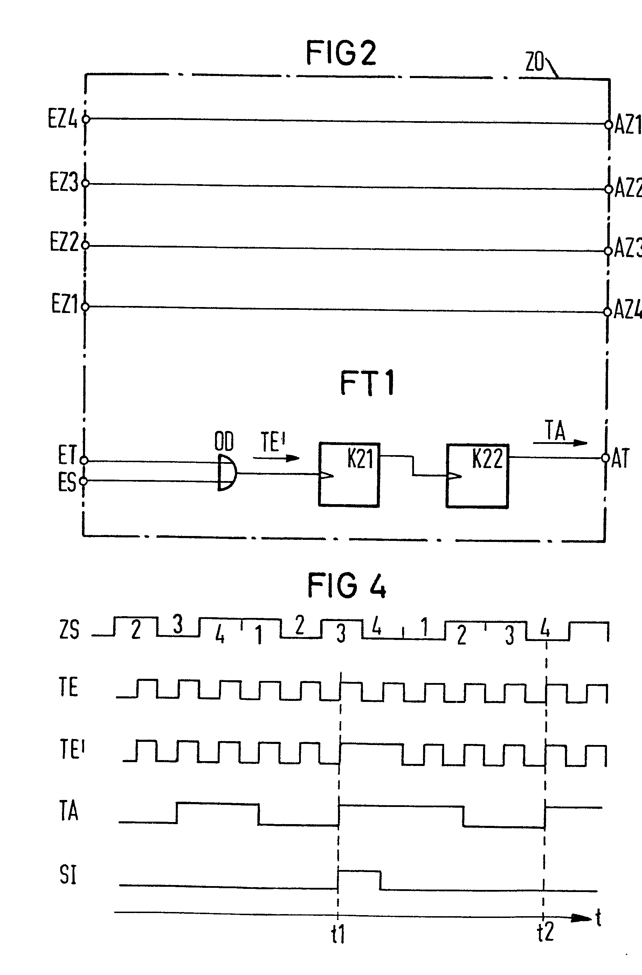

Die Zuordnungseinrichtung ZO, die in Figur 2 dargestellt ist, enthält zwei als Viererteiler FT1 geschaltete Kippstufen K21 und K22. Der ersten Kippstufen K21 wird der Empfangstakt über einen ersten Eingang ET eines ODER-Gatters OD zugeführt, der zweite Eingang des ODER-Gatters entspricht dem Synchronisiereingang ES. Ein Ausgang der zweiten Kippstufe 22 entspricht dem Taktausgang AT. Die vier Eingänge EZ1 bis EZ4 sind jeweils mit den Ausgängen AZ4 bis AZ1 verbunden. Durch die zyklische Vertauschung der Benennung (4 in 1, 3 in 2, usw.) wird eine zeitlich korrekte Zuordnung der Benennung der empfangenen Bits erreicht.

Am Ausgang AZ1 der Zuordnungseinrichtung liegt das zuerst empfangene Bit an.

Die Funktion der Synchronisiereinrichtung wird anhand eines Impulsdiagramms (Figur 4) erläutert. Das Zeitmultiplexsignal ZS wird mit dem schnellen Empfangstakt TE in das Schieberegister SPU eingespeichert. In dem Zeitmultiplexsignal ZS ist eine bestimmte Bitkombination, das Rahmenkennungswort enthalten. Nach jeweils vier Empfangs-Taktimpulsen werden mit einem um den Faktor 4 langsameren Takt TA die an den Ausgängen der Kippstufen K4 bis K1 des Schieberegisters SPU anliegenden Bits parallel in jeweils die erste Kippstufe der vier Schieberegister SR1 bis SR4 übernommen. Nach jeweils vier weiteren Taktimpulsen TE wiederholt sich dieser Vorgang. Wurde ein Rahmenkennungswort in der richtigen Phasenlage empfangen, so liegen die ersten vier Bits dieses Rahmenkennungswortes an den Ausgängen der Schieberegister SR1 bis SR4 an. Die weiteren vier Bits des Rahmenkennungswortes liegen an den zweiten Kippstufen der Schieberegister an, während die letzten vier Bits des in diesem Beispiel 12 Bits langen Rahmenkennungswortes an den Ausgängen der ersten Kippstufen der Schieberegister anliegen. Bei einem Rahmenkennungswort gibt die Rahmenkennungswort-Erkennungsschaltung RWE einen Impuls ab, der der Synchronisierung den Zustand « in Phase » signalisiert. Bleibt dieses Rahmenkennungswort für die Dauer einer oder mehrerer Rahmenperioden des Multiplexsignales aus, so wird ein Synchronisiervorgang eingeleitet. Die Synchronisierschaltung SYN gibt zum Zeitpunkt t1 einen Synchronisierimpuls SI von der Dauer einer Periode des Empfangstaktes TE ab, der, auf den Eingang ES des ODER-Gatters OD geführt, den Ausgang des ODER-Gatters auf der logischen 1 hält — dieser Takt ist mit TE' bezeichnet — und dadurch einen Impuls des Empfangstaktes TE ausblendet. Der am Ausgang AT der Zuordnungseinrichtung abgebende Takt TA ist entsprechend um eine Periode des Empfangstaktes TE versetzt (t2). Jetzt werden die um einen Impuls des Empfangstaktes TE versetzten Bits des Zeitmultiplexsignals in die Schieberegister SR1 bis SR4 übernommen und auf die richtige Phasenlage hin überprüft. Spätestens nach drei Synchronisiervorgängen ist die richtige Phasenlage erreicht und der Synchronisiervorgang beendet.

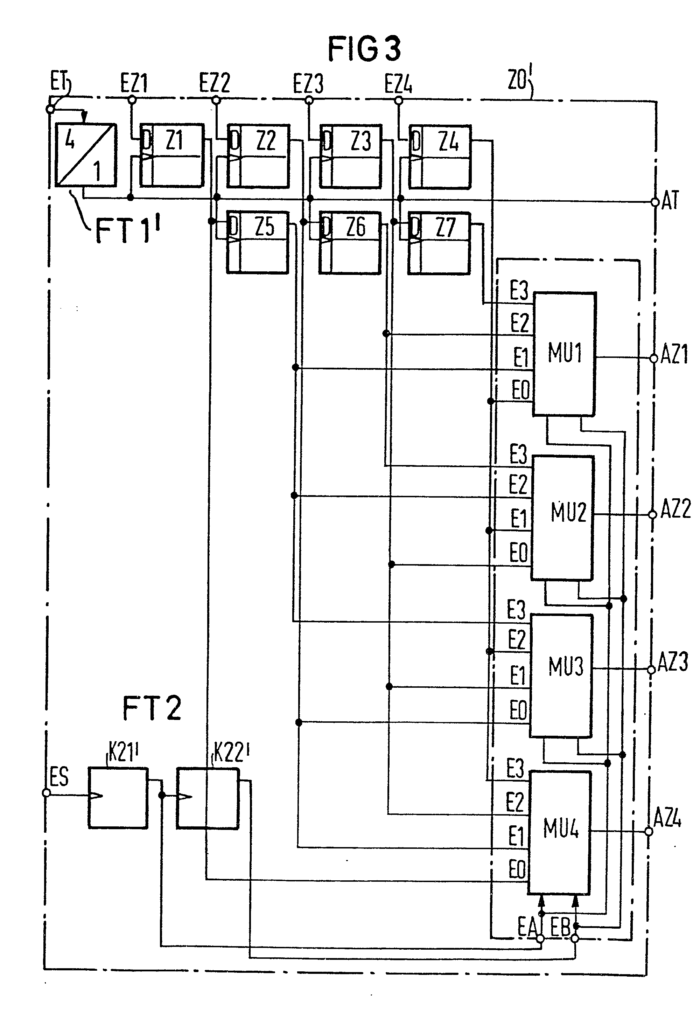

In Figur 3 ist ein weiteres Ausführungsbeispiel einer Zuordnungseinrichtung ZO' dargestellt. Sie enthält vier D-Kippstufen Z1 bis Z4, deren Digitalsignaleingänge D an die Punkte EZ1 bis EZ4 angeschlossen sind ; der Digitalsignaleingang D der Kippstufe Z1 ist hierbei mit dem Eingang EZ1 verbunden, der Digitalsignaleingang der vierten Kippstufe Z4 ist mit dem Eingang EZ4 verbunden. Entsprechend gilt für die zweite Kippstufe Z2 und die dritte Kippstufe Z3. Die Ausgänge der Kippstufen Z1 bis Z3 sind jeweils mit einem Digitalsignaleingang von Kippstufen Z5 bis Z7 verbunden. Alle Kippstufen Z1 bis Z4 und Z5 bis Z7 bekommen ihren Takt von einem Frequenzteiler FT1', dessen Eingang auf den Takteingang ET geführt ist. Der Ausgang dieses Viererteilers FT1' ist wieder auf den Taktausgang AT geschaltet. Die Ausgänge der Kippstufen Z1 bis Z4 und die Ausgänge der Kippstufen Z5 bis Z7 sind so an die jeweiligen Eingänge EO bis E3 von vier Multiplexern MO1 bis MO4 geschaltet, daß die Multiplexer an ihren Ausgängen AZ1 bis AZ4 wiederum jeweils eine der vier möglichen den vier Phasenlagen entsprechende Bitkombination abgeben. Die Steuereingänge EA und EB der Multiplexer MU1 bis MU4 sind an die Ausgänge zweier als Binärteiler geschalteter Kippstufen K21' und K22' geschaltet. Der niederwertigste Eingang EA der Multiplexer ist hierbei mit dem Ausgang der ersten Kippstufen K21' des Frequenzteilers FT2 verbunden. Der Takteingang dieser Kippstufe ist auf den Synchroneingang ES geführt.

Die Zuordnungseinrichtung ZO' erfüllt die gleiche Funktion wie die Zuordnungseinrichtung ZO. Bei einem Synchronisiervorgang wird der Synchronimpuls SI auf dem Takteingang ES der ersten Kippstufe K21' gegeben, durch das Kippen dieser Kippstufe und eventuell auch der folgenden Kippstufe K22' ändert sich die Adressierung der Multiplexer MU1 bis MU4 und es wird das Zeitmultiplexsignal ZS in einer neuen Phasenlage an die Schieberegister SR1 bis SR4 weitergegeben. Im übrigen ist die Funktionsweise der Synchronisiereinrichtung gleich geblieben.

Die gesamte Synchronisierzeit setzt sich aus der Haltezeit, der Fangzeit und der Prüfzeit zusammen. Bei diesem Ausführungsbeispiel beträgt die Haltezeit vier Rahmenperioden des Zeitmultiplexsignals ZS. Wenn innerhalb dieser vier Perioden kein Rahmenkennungswort empfangen wurde, wird der eigentliche Synchronisiervorgang eingeleitet. Die Fangzeit bis zum Herstellen des Synchronismus ist gegenüber einem optimal schnellen Synchronisierverfahren um maximal 3 Rahmenperioden verlängert. Hierbei wird der ungünstigste Fall vorausgesetzt, daß das Zeitmultiplexsystem aufgrund von Störungen des Zeitmultiplexsignals ZS irrtümlich aus der Phase gefallen ist. Dann muß das Rahmenkennungswort in den vier möglichen Phasenlagen gesucht werden. Es schließt sich noch eine sogenannte Prüfzeit von 2 Rahmenperioden an, in der das Rahmenkennungswort weitere zweimal richtig empfangen werden muß.

Die gesamte Synchronisierzeit ist um maximal 3 Rahmenperioden gegenüber einer optimal schnellen Synchronisiereinrichtung verlängert ; dies entspricht ca 40 %. Die Gesamtsynchronisierzeit bleibt jedoch unterhalb der Haltezeit eines der vier Untersysteme (KE1-KE4).

**Ansprüche**

1. Synchronisiereinrichtung für ein Zeitmultiplexsystem mit einem Empfangsschieberegister (SPU) als Seriell-Parallel-Umsetzer, dessen Eingang ein Zeitmultiplexsignal zugeführt ist, mit einer Rahmenkennungswort-Erkennungsschaltung (RWE), einer Taktzentrale (TV) mit Teilerschaltungen und mit einer Synchronisierschaltung (SYN), dadurch gekennzeichnet, daß bei n (n = 2, 3, 4 ...) möglichen Phasenlagen und bei einem $k \cdot n = 1$ (k = 1, 2, 3 ...) Bits langen Rahmenkennungswort das Empfangsschieberegister (SPU) n Kippstufen enthält, daß die Digitalsignaleingänge (ES) von n Schieberegistern (SR1 ... SRn) mit jeweils k Kippstufen über eine Zuordnungseinrichtung (ZO) mit den Ausgängen der n Kippstufen des Empfangsschieberegisters (SPU) verbunden sind, daß die Zuordnungseinrichtung (ZO) einen von einem Empfangtakt (TE) angesteuerten Frequenzteiler mit einem Teilungsverhältnis von n : 1 enthält, dessen Ausgang (AT) mit den Takteingängen der Schieberegister (SR1 ... SRn) verbunden ist, daß die Eingänge der Rahmenkennungswort-Erkennungsschaltung (RWE) an die Ausgänge der Kippstufen der Schieberegister (SR1 ... SRn) angeschlossen sind und daß der Ausgang der Rahmenkennungswort-Erkennungsschaltung (RWE) mit der Synchronisierschaltung (SYN) verbunden ist, die über die Zuordnungsschaltung (ZO) die Phasenlage der in die Schieberegister (SR1 ... SRn) eingelesenen Bits gegenüber dem Zeitmultiplexsignal (ZS) ändert.

2. Synchronisiereinrichtung nach Anspruch 1, dadurch gekennzeichnet, daß dem Takteingang des Frequenzteilers (FT1) der Zuordnungseinrichtung (ZO) ein ODER-Gatter (OD) vorgeschaltet ist, daß einem ersten Eingang des ODER-Gatters (OD) der Empfangtakt (TE) zugeführt ist, daß einem zweiten Eingang des ODER-Gatters (OD) ein Synchronisierimpuls von der Synchronisierschaltung (SYN) zugeführt ist, der jeweils einen Empfangtakt (TE) unwirksam macht, und daß jeweils ein Eingang (EZ1 ... EZn) der Zuordnungseinrichtung (ZO) direkt mit jeweils einem Ausgang (AZn ... AZ1) der Zuordnungseinrichtung (ZO) verbunden ist (Fig. 2).

3. Synchronisiereinrichtung nach Anspruch 1, dadurch gekennzeichnet, daß eine anders ausgeführte Zuordnungseinrichtung (ZO') mit einem Frequenzteiler (FT1') mit einem Teilungsverhältnis n : 1 vorgesehen ist, dessen Eingang mit dem Takteingang (ET) und dessen Ausgang mit dem Taktausgang (AT) der Zuordnungsschaltung (ZO') verbunden ist, daß eine erste Gruppe mit n Kippstufen (Z1 ... Zn) vorgesehen ist, deren Digitalsignaleingänge (D) an die Ausgänge der Kippstufen (K1 ... Kn) des Empfangsschieberegisters (SPU) angeschlossen sind, daß eine zweite Gruppe von n − 1 Kippstufen (Z(n + 1)) bis

(Z(2 n − 1)) vorgesehen ist, daß die Digitalsignaleingänge (D) dieser zweiten Gruppe von Kippstufen an die Ausgänge der ersten bis (n − 1) ten Kippstufe der ersten Gruppe angeschaltet sind (bei n = 4 : Z5 an Z1, Z6 an Z2 usw.), daß die Ausgänge der Kippstufen der ersten und zweiten Gruppe so mit den jeweiligen Eingängen (E-O ... E(n − 1)) von n Multiplexern (MU1 ... MUn) angeschaltet sind, daß die Ausgänge der Kippstufen (Z(1 + m) bis (Z(n + m)) (m = 0, 1, 2, ..., n − 1) jeweils mit den Eingängen (EO ... E(n − 1)) jedes Multiplexers (MU(n − m)) verbunden sind, also an den Ausgängen der Multiplexer (MU1 ... MUn) n möglichen Bitkombinationen entsprechend n möglichen Phasenlagen anliegen, und daß ein weiterer Frequenzteiler (FT2) mit einem Teilungsverhältnis von n : 1 vorgesehen ist, dessen Ausgänge mit den Adreßeingängen (EA, EB, ...) der Multiplexer (MU1 ... MUn) verbunden sind. (Fig. 3).

**Claims**

1. A synchronising device for a t.d.m. system having a receiving shift register (SPU) as series-parallel converter whose input is supplied with a t.d.m. signal, having a frame code word recognition circuit (RWE), a clock pulse central control (TV) with divider circuits, and having a synchronising circuit (SYN), characterised in that with n (n = 2, 3, 4 ...) possible phase positions and a frame code word of length $k \cdot n = 1$ (k = 1, 2, 3 ...) bits, the receiving shift register (SPU) contains n flip-flops, that the digital signal inputs (ES) of n shift registers (SR1 ... SRn) each containing k flip-flops are connected via an allocation device (ZO) to the outputs of the n flip-flops of the receiving shift register (SPU), that the allocation device (ZO) includes a frequency divider which is operated by a receiving clock pulse train (TE) which has a division ratio of n : 1 and whose output (AT) is connected to the clock pulse inputs of the shift registers (SR1 ... SRn), that the inputs of the frame code word recognition circuit (RWE) are connected to the outputs of the flip-flops of the shift registers (SR1 ... SRn), and that the output of the frame code word recognition circuit (RWE) is connected to the synchronising circuit (SYN) which, via the allocation circuit (ZO), changes the phase state, in relation to the t.d.m. signal (ZS), of the bits which have been input into the shift registers (SR1 ... SRn).

2. Synchronising device as claimed in claim 1, characterised in that the clock pulse input of the frequency divider (FT1) of the allocation device (ZO) is preceded by an OR gate (OD), that a first input of the OR gate (OD) is supplied with the received clock pulse train (TE), that a second input of the OR gate (OD) is supplied with a synchronising pulse from the synchronising circuit (SYN) which in each case deactivates a received clock pulse train (TE), and that one input (EZ1 ... EZn) of the allocation device (ZO) is in each case directly connected to an output (AZn ... AZ1) of the allocation device (ZO) (Fig. 2).

3. Synchronising device as claimed in claim 1, characterised in that an allocation device (ZO') of different design is provided with a frequency divider (FTI') whose division ratio is n : 1, whose input is connected to the clock pulse input (ET) and whose output is connected to the clock pulse output (AT) of the allocation circuit (ZO'), that a first group containing n flip-flops (Z1 ... Zn) is provided, whose digital signal inputs (D) are connected to the outputs of the flip-flops (K1 ... Kn) of the receiving shift register (SPU), that a second group containing n − 1 flip-flops (Z(n + 1)) to (Z(2 n − 1)) is provided, that the digital signal inputs (D) of this second group of flip-flops are connected to the outputs of the first to (n − 1) th flip-flop of the first group (where n = 4 : Z5 to Z1, Z6 to Z2 etc.), that the outputs of the flip-flops of the first and second groups are connected to the associated inputs (EO ... E (n − 1)) of n multiplexers (MU1 ... MUn) in such manner that the outputs of the flip-flops (Z (1 + m)) to (Z (n + m)) (m = 0, 1, 2, ... n − 1) are each connected to the inputs (EO ... E (n − 1)) of each multiplexer (MU (n − m)), thus n possible bit combinations corresponding to n possible phase positions occur at the outputs of the multiplexers (MU1 ... MUn), and that a further frequency divider (FT2) is provided which has a division ratio of n : 1, and whose outputs are connected to the address inputs (EA, EB ...) of the multiplexers (MU1 ... MUn). (Fig. 3).

**Revendications**

1. Dispositif de synchronisation pour un système de multiplexage par répartition dans le temps, avec un registre à décalage de réception (SPU) comme convertisseur série-parallèle à l'entrée duquel on applique un signal à multiplexage par répartition dans le temps, avec un circuit d'identification du mot de caractérisation de la trame (RWE), une centrale de cadence (TV) avec des circuits diviseurs et avec un circuit de synchronisation (SYN), caractérisé par le fait que pour n (n = 2, 3, 4 ...) positions de phase possibles et pour un mot de caractérisation ayant une longueur de k n (k = 1, 2, 3 ...) bits, le registre à décalage de réception (SPU) comporte n étages à bascule, que les entrées des signaux numériques (ES) de n registres à décalage (SR1 ... SRn) à respectivement k étages à bascule sont reliées, par l'intermédiaire d'un dispositif de coordination (ZO), aux sorties des n étages à bascule du registre à décalage de réception (SPU), que le dispositif de coordination (ZO) comporte un diviseur de fréquence commandé par une cadence de réception (TE) et présentant un rapport de division de n : 1, les sorties (AT) de ce diviseur de fréquence étant reliées aux entrées de cadence des registres à décalage (SR1 ... SRn), que les entrées du circuit d'identification du mot de caractérisation de la trame (RWE) sont reliées aux sorties des étages à bascule des registres à décalage (SR1 ... SRn) et que la sortie du circuit d'identification du mot de caractérisation de la trame (RWE) est reliée au circuit de synchronisation (SYN) qui, par l'intermédiaire du circuit de coordination (ZO), modifie la position de phase des bits enregistrés dans les registres à décalage (SR1 ... SRn), par rapport au signal à multiplexage par répartition dans le temps (ZS).

2. Dispositif de synchronisation selon la revendication 1, caractérisé par le fait qu'en amont de l'entrée de cadence du diviseur de fréquence (FT1) du dispositif de coordination (ZO) est montée une porte OU (OD), qu'à une première entrée de la porte OU (OD) est appliquée la cadence de réception (TE), qu'à une seconde entrée de la porte OU (OD) est appliquée une impulsion de synchronisation du circuit de synchronisation (SYN) qui rend respectivement inefficace une cadence de réception (TE) et que respectivement une entrée (EZ1 ... EZn) du dispositif de coordination (ZO) est reliée directement et respectivement à une sortie (AZn ... AZ1) du dispositif de coordination (ZO). (Fig. 2).

3. Dispositif de synchronisation selon la revendication 1, caractérisé par le fait qu'il est prévu un dispositif de coordination (ZO') de réalisation différente, avec un diviseur de fréquence (FT1') ayant un rapport de division n : 1, dont l'entrée est reliée à l'entrée de cadence (ET) et dont la sortie est reliée à la sortie de cadence (AT) du dispositif de coordination (ZO'), qu'il est prévu un premier groupe à n étages à bascule (Z1 ... Zn) dont les entrées D des signaux numériques sont reliées aux sorties des étages à bascule (K1 ... Kn) du registre à décalage d'entrée (SPU), qu'il est prévu un second groupe de n − 1 étages à bascule (Z (n + 1)) à (Z (2 n − 1)), que les entrées (D) des signaux numériques de ce second groupe d'étages à bascule sont reliées aux sorties du premier au (n − 1)$^{ième}$ étage à bascule du premier groupe (pour n = 4 : Z5 à Z1, Z6 à Z2 etc.), que les sorties des étages à bascule du premier et du second groupe sont reliées de telle façon avec les entrées respectives (EO ... E(n − 1)) de n multiplexeurs (MU1 ... MUn) que les sorties des étages à bascule (Z(1 + m)) à (Z(n + m)) (m = 0, 1, 2 ... n − 1) sont respectivement reliées aux entrées (EO ... E(n − 1)) de chaque multiplexeur (MU(n − m)), donc qu'aux sorties des multiplexeurs (MU1 ... MUn) sont appliquées n combinaisons de bits correspondant à n positions de phase possibles, et qu'il est prévu un diviseur de fréquence supplémentaire (FT2) à rapport de division de n : 1, dont les sorties sont reliées aux entrées d'adresses (EA, EB, ...) des multiplexeurs (MU1 ... MUn). (Fig. 3).

# FIG 1

# FIG 2

ZO

EZ4              AZ1

EZ3              AZ2

EZ2              AZ3

EZ1              AZ4

## FT1

ET    OD    $TE^I$    K21    K22    TA    AT
ES

# FIG 4

ZS   2   3   4   1   2   3   4   1   2   3   4

TE

$TE^I$

TA

SI

            t1            t2    t

# FIG 3